(19) Europäisches Patentamt
European Patent Office
Office européen des brevets

(11) **EP 4 625 115 A1**

(12) **EUROPEAN PATENT APPLICATION**
published in accordance with Art. 153(4) EPC

(43) Date of publication:
**01.10.2025 Bulletin 2025/40**

(21) Application number: **23909046.7**

(22) Date of filing: **27.06.2023**

(51) International Patent Classification (IPC):
**G06F 1/3237** (2019.01)

(52) Cooperative Patent Classification (CPC):
**G06F 1/04; G06F 1/3237**

(86) International application number:
**PCT/CN2023/102624**

(87) International publication number:
**WO 2024/139101 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022 CN 202211719877**

(71) Applicant: **Sanechips Technology Co., Ltd.
Shenzhen, Guangdong 518055 (CN)**

(72) Inventor: **ZHAO, Xiangxun
Shenzhen, Guangdong 518055 (CN)**

(74) Representative: **Canzler & Bergmeier
Patentanwälte
Partnerschaft mbB
Despag-Straße 6
85055 Ingolstadt (DE)**

(54) **PROCESSING METHOD, CONTROL METHOD, CHIP, FILTER, APPARATUS, SYSTEM AND MEDIUM**

(57) A data processing method, comprising: receiving an energy-saving control signal (S110); receiving periodic synchronization signals (S120); in response to the energy-saving control signal being in a valid state, outputting an invalid clock signal, the invalid clock signal being a non-flip signal (S130); and in response to the energy-saving control signal being in an invalid state and the synchronization signals being received, outputting a valid clock signal, and processing data to be processed (S140). Further provided are an energy-saving control method, a chip, an energy-saving control apparatus, a filter, a data processing system and a computer-readable storage medium.

FIG. 1

**Description**

CROSS REFERENCE TO RELATED APPLICATIONS

The present disclosure claims the priority to Chinese Patent Application No. 202211719877.7 filed on December 30, 2022, the contents of which are incorporated herein by reference in their entirety.

TECHNICAL FIELD

The present disclosure relates to the field of chip technology, and in particular, to a data processing method, a power-saving control method, a chip, a power-saving control apparatus, a filter, a data processing system, and a computer-readable storage medium.

BACKGROUND

Power, Performance, Area (PPA) are three important indicators for evaluating a chip. With the rapid development of chip technology, the power becomes a key factor restricting the chip technology.

SUMMARY

In a first aspect of the present disclosure, there is provided a data processing method, including: receiving a power-saving control signal; receiving a periodic synchronization signal; in response to the power-saving control signal being in an active state, outputting an inactive clock signal, the inactive clock signal being a non-flipping signal; and in response to the power-saving control signal being in an inactive state and the synchronization signal being received, outputting an active clock signal, and processing to-be-processed data.

In a second aspect of the present disclosure, there is provided a power-saving control method, including: identifying to-be-processed data; in response to the to-be-processed data meeting a power-saving condition, generating a power-saving control signal; generating a periodic synchronization signal; sending the power-saving control signal to a target chip; and sending the synchronization signal to the target chip.

In a third aspect of the present disclosure, there is provided a chip, including: at least one first processor; and a first storage device having stored thereon at least one first computer program, which, when executed by the at least one first processor, causes the at least one first processor to implement the data processing method in the first aspect of the present disclosure.

In a fourth aspect of the present disclosure, there is provided a filter, including the chip in the third aspect of the present disclosure.

In a fifth aspect of the present disclosure, there is provided a power-saving control apparatus, including: at least one second processor; and a second storage device having stored thereon at least one second computer program which, when executed by the at least one second processor, causes the at least one second processor to implement the power-saving control method in the second aspect of the present disclosure.

In a sixth aspect of the present disclosure, there is provided a data processing system, including the filter in the fourth aspect of the present disclosure and the power-saving control apparatus in the fifth aspect of the present disclosure.

In a seventh aspect of the present disclosure, there is provided a computer-readable storage medium having stored thereon a computer program which, when executed by a processor, causes the processor to implement the method provided by the present disclosure.

BRIEF DESCRIPTION OF DRAWINGS

FIG. 1 is a flowchart illustrating an implementation of a data processing method according to the present disclosure;
FIG. 2 is a timing diagram of all signals involved in an implementation of a data processing method according to the present disclosure;
FIG. 3 is a schematic diagram illustrating input and output of a chip;
FIG. 4 is a timing diagram of all signals when the chip shown in FIG. 3 performs the data processing method;
FIG. 5 is a flowchart illustrating a power-saving control method according to the present disclosure;
FIG. 6 is a schematic diagram of an implementation of a chip according to the present disclosure;
FIG. 7 is a schematic diagram of an implementation of a power-saving control apparatus according to the present disclosure; and

FIG. 8 is a schematic diagram of a computer-readable medium according to the present disclosure.

DETAIL DESCRIPTION OF EMBODIMENTS

In order to enable those of ordinary skill in the art to better understand the technical solution of the present disclosure, a data processing method, a power-saving control method, a chip, a power-saving control apparatus, a filter, a data processing system, and a computer-readable medium provided by the present disclosure are described in detail below with reference to the drawings.

Exemplary embodiments will be described more fully below with reference to the drawings, but the exemplary embodiment described herein may be embodied in different forms, and the present disclosure should not be interpreted as being limited to the embodiment described herein. The embodiments are provided to make the present disclosure more thorough and complete, and are intended to enable those of ordinary skill in the art to fully understand the scope of the present disclosure.

The embodiments described herein and the features therein may be combined with one another if no conflict is incurred.

The term "and/or" used herein includes any or all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the terms "comprise/include" and/or "be made/formed of" used herein indicate the presence of the particular features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the existing technology and the background of the present disclosure, and should not be interpreted in an idealized or overly formal sense unless expressly so defined herein.

Total power of a chip includes dynamic power and static power. The dynamic power includes switching power (which may also be referred to as flipping power, short-circuit power, or internal power). **In** a digital Complementary Metal Oxide Semiconductor (CMOS) circuit, the switching power is generated due to charging and discharging load capacitance, charging and discharging a power supply, or the like. The switching power is mainly related to a flipping rate of an input signal. Specifically, the switching power may be expressed by following formula (1):

$$\mathrm{Pswitch} = (1/2)(\mathrm{VDD})2 * \mathrm{Cload} * \mathrm{Tr} \qquad (1),$$

VDD denotes a power supply voltage;
Cload denotes an equivalent capacitance load of a back-stage circuit; and
Tr is the flipping rate of the input signal.

A clock signal is an input signal with a polarity that may be inverted. Therefore, the power may be effectively reduced by reducing unnecessary flipping of the clock signal and data.

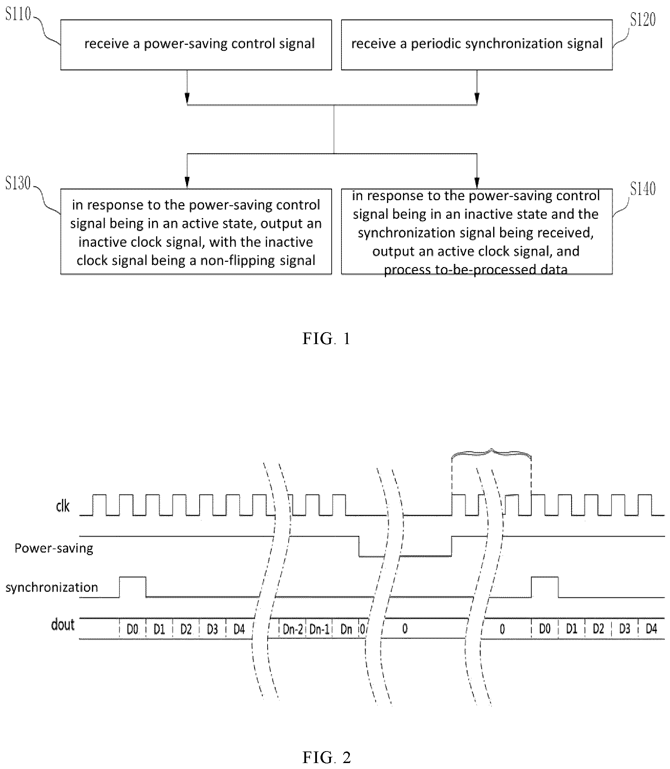

In view of above, in a first aspect of the present disclosure, there is provided a data processing method, and as shown in FIG. 1, the data processing method may include following operations S110 to S140: at operation S110, receiving a power-saving control signal; at operation S120, receiving a periodic synchronization signal; at operation S130, in response to the power-saving control signal being in an active state, outputting an inactive clock signal, with the inactive clock signal being a non-flipping signal; and at operation S140, in response to the power-saving control signal being in an inactive state and the synchronization signal being received, outputting an active clock signal, and processing to-be-processed data.

The data processing method may be performed by a chip for power saving. If the power-saving control signal being in the active state is received, it indicates that the chip is desired to be subjected to power saving. In order to realize power saving, a clock module outputs a non-flipping inactive clock signal, "data processing" of the chip including the clock module is stopped accordingly, and the chip is not to output data, thereby reducing power thereof.

In the present disclosure, the synchronization signal is a periodic signal. In response to the power-saving control signal being in the inactive state, the chip may output an active clock signal even if the synchronization signal is not received. In a case where the synchronization signal is not received, the to-be-processed data cannot be processed, and thus the chip may currently output inactive data (i.e., dirty data). In the present disclosure, the periodic synchronization signal is configured to wake the chip up from a power-saving state, so that after the synchronization signal is received, the to-be-processed data starts to be processed, and active data is output.

The data processing method provided by the present disclosure can realize power saving of the chip, and also can wake the chip up from the power-saving state quickly.

The shorter the period of the synchronization signal is, the shorter the duration of outputting the inactive data by the chip is. In the present disclosure, the synchronization signal with a relatively small period having a relatively short duration (e.g., a millisecond-level period or a microsecond-level period) may be provided for achieving a fast recovery of the chip from the power-saving state to an operating state.

In the present disclosure, the clock signal flips during the output of the dirty data, which also causes power consumption during the output of the dirty data. The shorter the period of the synchronization signal is, the shorter the duration of outputting the inactive data is, thereby further reducing the power consumption. In an alternative implementation, the synchronization signal is an embedded frame header (or in-band signaling).

There are many types of embedded frame headers during data transmission. In the present disclosure, a frequency division process may be performed on a relatively large embedded frame header having a millisecond-level period, and a relatively small embedded frame header obtained through the frequency division process may be used as the synchronization signal. In an alternative implementation, the period of the synchronization signal may be on the order of microseconds.

It should be noted that the sequence numbers of the above operations do not represent an order of the operations being proformed, but are just for convenience of description.

FIG. 2 is a timing diagram of all the signals involved in the data processing method. In the implementation illustrated by FIG. 2, a high-level power-saving control signal is an inactive power-saving control signal, and a low-level power-saving control signal is an active power-saving control signal.

In response to the power-saving control signal being pulled down, the clock signal clk stops flipping, and the chip enters the power-saving state.

In response to the power-saving control signal being pulled up and no synchronization signal being received (that is, no high-level synchronization signal is received), the clock signal clk resumes to flip, and the dirty data is output (that is, dout in FIG. 2 is 0).

In response to the power-saving control signal being pulled up and a synchronization signal being received (that is, a high-level synchronization signal is received), the clock signal clk keeps to flip, and the active data is output (that is, dout in FIG. 2 is D0...).

In the above implementation, power consumption is also caused during the duration of outputting the dirty data. Thus, the shorter the period of the synchronization signal is, the shorter the duration of outputting the dirty data is, and accordingly, the faster the recovery from the power-saving state to the operating state.

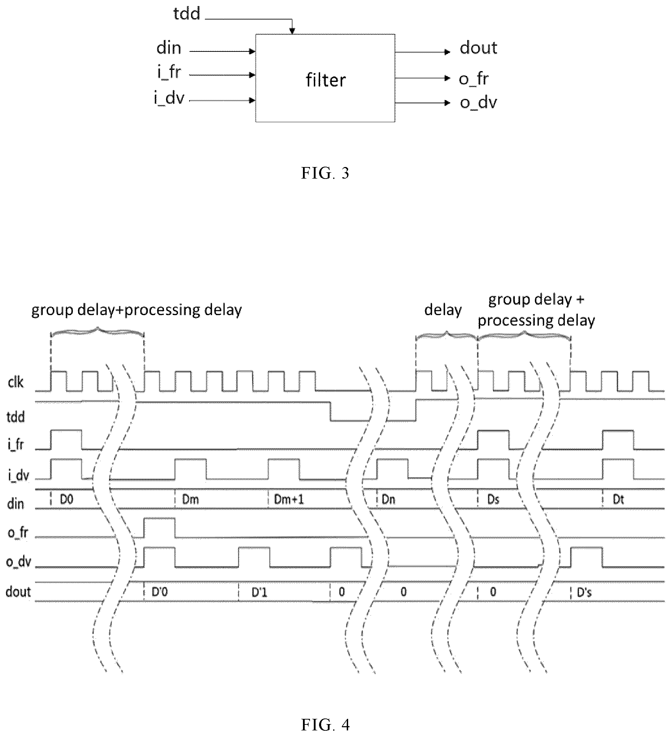

FIG. 3 is a schematic diagram illustrating input and output of a chip. FIG. 4 is a timing diagram of all the signals in the present implementation. In FIG. 3, tdd denotes the power-saving control signal, din denotes a data input signal (i.e., the to-be-processed data), i_fr denotes an input embedded frame header (i.e., the synchronization signal), i_dv denotes an input data active signal, dout denotes output data subjected to processing by the chip, o_fr denotes an output embedded frame header, and o_dv denotes an output data active signal.

In the implementation illustrated by FIG. 3, the chip may be a filter, and an effective duty ratio of input data is 1:3. That is, merely one clock signal clk among every three clock signals clk is active. A time interval between the input embedded frame header i_fr and the output embedded frame header o_fr is equal to "group delay+processing delay" of the filter.

In response to the power-saving control signal tdd being pulled up, the clock signal flips normally. Since the input data active signal i_dv and the data input signal din are always input, data filtering processing is continued, but since the embedded frame header i_fr does not arrive, and inactive dirty data may occur in dout before the arrival of the embedded frame header i_fr.

After synchronization of i_fr, the data filtering processing generates correct dout. In the process, a frame header with a relatively small configurable period is used as the embedded frame header i_fr, so that a delay from the beginning of the normal flipping of the clock (after tdd is pulled up from a low level) to the arrival of the embedded frame header can be reduced, and the output dout of the filter can be faster recovered to the active data subjected to the filtering processing after the synchronization of the frame header; and in this way, a duration of inactive flipping of dout and clk during the delay can be reduced, and with the aid of the power-saving control signal tdd, power consumption can be further reduced, and filtering efficiency can be improved.

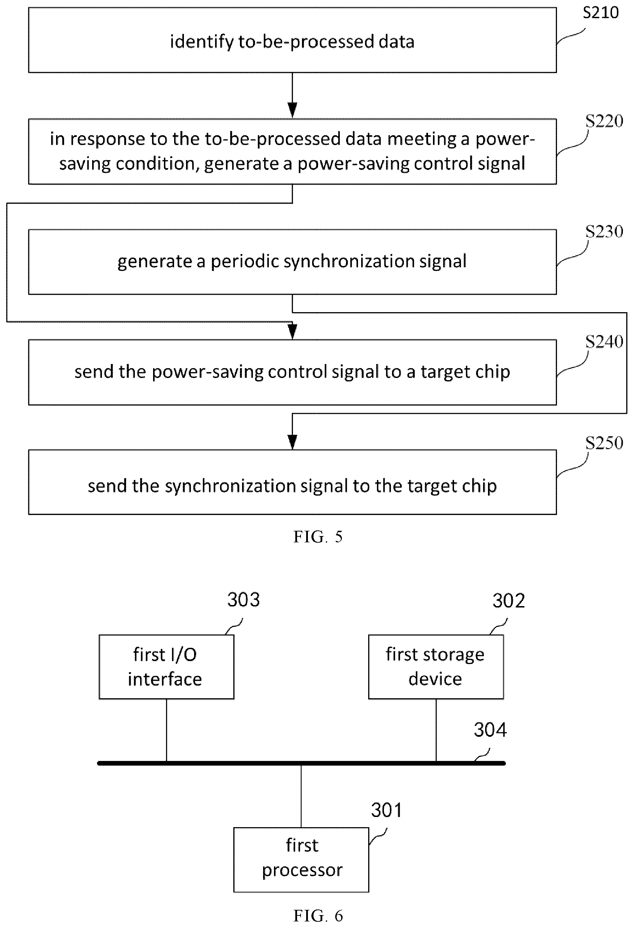

In a second aspect of the present disclosure, there is provided a power-saving control method, and as shown in FIG. 5, the power-saving control method may include following operations S210 to S250: at operation S210, identifying to-be-processed data; at operation S220, in response to the to-be-processed data meeting a power-saving condition, generating a power-saving control signal; at operation S230, generating a periodic synchronization signal; at operation S240, sending the power-saving control signal to a target chip; and at operation S250, sending the synchronization signal to the target chip.

The power-saving control method provided by the present disclosure may be performed by an electronic device other than the target chip. For example, the power-saving control method provided by the present disclosure may be performed by a dedicated power-saving control apparatus.

The to-be-processed data at operation S210 is data to be processed by the target chip. In the present disclosure, after the to-be-processed data is identified, whether power saving is desired can be determined. In response to the to-be-processed data meeting the power-saving condition, the power-saving control signal is generated. Moreover, the current power-saving control apparatus may also generate the synchronization signal described above.

After the synchronization signal and the power-saving control signal are sent to the target chip, the target chip may process the to-be-processed data with the data processing method provided in the first aspect of the present disclosure.

How to generate the synchronization signal is not particularly limited in the present disclosure. In an alternative implementation, generating the periodic synchronization signal includes: performing a frequency division process on an embedded frame header having a millisecond-level period to obtain the synchronization signal.

In the present disclosure, parameters for the frequency division process may be controlled, so as to obtain the synchronization signal having a desired period.

In an implementation of the present disclosure, a plurality of synchronization signals may be respectively determined by adjusting the parameters for the frequency division process for a plurality of times, a data processing process is then performed using each of synchronization signals, power consumption situations of all the data processing processes are compared to select the optimal synchronization signal, so that the optimal parameters for the frequency division process are selected.

In a third aspect of the present disclosure, as shown in FIG. 6, there is provided a chip, including: at least one first processor 301; a first storage device 302 having stored thereon at least one first computer program which, when executed by the at least one first processor 301, causes the at least one first processor 301 to implement the data processing method in the first aspect of the present disclosure.

In an implementation of the present disclosure, the chip may further include at least one first input/output (I/O) interface 303 connected between the at least one first processor 301 and the first storage device 302 and configured to enable information interaction between the at least one one first processor 301 and the first storage device 302.

The first processor 301 is a device having data processing capability, and includes, but is not limited to, a Central Processing Unit (CPU); the first storage device 302 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the first I/O interface (read/write interface) 303 is connected between the first processor 301 and the first storage device 302, is capable of enabling the information interaction between the first processor 301 and the first storage device 302, and includes, but is not limited to, a data bus (Bus).

In some implementations, the first processor 301, the first storage device 302, and the first I/O interface 303 are connected to each other through a first bus 304, and then are connected to other components of the chip.

In a fourth aspect of the present disclosure, there is provided a filter, which includes the chip provided in the third aspect of the present disclosure.

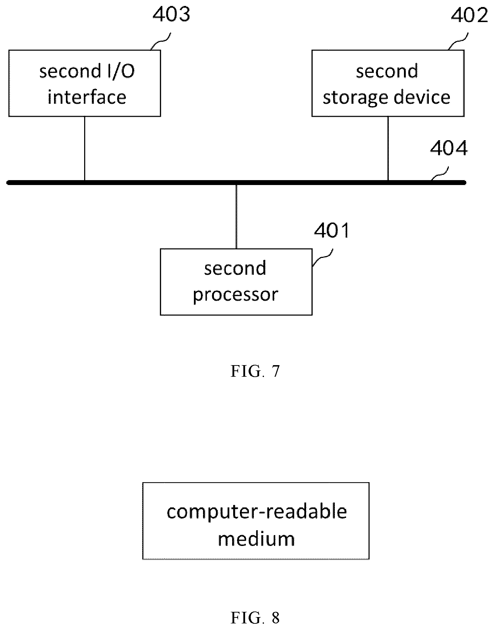

In a fifth aspect of the present disclosure, as shown in FIG. 7, there is provided a power-saving control apparatus, including: at least one second processor 401; a second storage device 402 having stored thereon at least one second computer program which, when executed by the at least one second processors 401, causes the at least one second processor 401 to implement the power-saving control method in the second aspect of the present disclosure.

In an implementation of the present disclosure, the power-saving control apparatus may further include at least one second I/O interface 403 connected between the at least one second processor 401 and the second storage device 402 and configured to enable information interaction between the at least one second processor 401 and the second storage device 402.

The second processor 401 is a device having data processing capability, and includes, but is not limited to, a CPU; the second storage device 402 is a device having data storage capability, and includes, but is not limited to, an RAM (more specifically, an SDRAM, a DDR SDRAM, etc.), an ROM, an EEPROM, and a FLASH; and the second I/O interface (read/write interface) 403 is connected between the second processor 401 and the second storage device 402, is capable of enabling the information interaction between the second processor 401 and the second storage device 402, and includes, but is not limited to, a data bus (Bus).

In some implementations, the second processor 401, the second storage device 402, and the second I/O interface 403 are connected to each other through a second bus 404, and then are connected to other components of the power-saving control apparatus.

In a sixth aspect of the present disclosure, there is provided a data processing system, including the filter provided in the fourth aspect of the present disclosure, and the power-saving control apparatus provided in the fifth aspect of the present disclosure.

In a seventh aspect of the present disclosure, as shown in FIG. 8, there is provided a computer-readable storage medium having stored thereon a computer program which, when executed by a processor, causes the processor to implement the method provided by the present disclosure.

It should be understood by those of ordinary skill in the art that the functional modules/units in all or some of the operations, the system, and the devices in the methods disclosed above may be implemented as software, firmware, hardware, or suitable combinations thereof. If implemented as hardware, the dividing between the functional modules/units stated above is not necessarily corresponding to the dividing of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable medium used in any method or technology for storing information (such as computer-readable instructions, data structures, program modules and other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication medium generally includes computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details may be made without departing from the scope of the present disclosure as claimed by the appended claims.

**Claims**

1.  A data processing method, comprising:

    receiving a power-saving control signal;
    receiving a periodic synchronization signal;
    in response to the power-saving control signal being in an active state, outputting an inactive clock signal, wherein the inactive clock signal is a non-flipping signal; and
    in response to the power-saving control signal being in an inactive state and the synchronization signal being received, outputting an active clock signal, and processing to-be-processed data.

2.  The data processing method of claim 1, wherein the synchronization signal is an embedded frame header.

3.  The data processing method of claim 1 or 2, wherein a period of the synchronization signal is in microseconds.

4.  A power-saving control method, comprising:

    identifying to-be-processed data;
    in response to the to-be-processed data meeting a power-saving condition, generating a power-saving control signal;
    generating a periodic synchronization signal;
    sending the power-saving control signal to a target chip; and
    sending the synchronization signal to the target chip.

5.  The power-saving control method of claim 4, wherein generating the periodic synchronization signal comprises:
    performing a frequency division process on an embedded frame header having a millisecond-level period to obtain the synchronization signal.

6. A chip, comprising:

   at least one first processor; and
   a first storage device having stored thereon at least one first computer program, which, when executed by the at least one first processor, causes the at least one first processor to implement the data processing method of any one of claims 1 to 3.

7. A filter, comprising the chip of claim 6.

8. A power-saving control apparatus, comprising:

   at least one second processor; and
   a second storage device having stored thereon at least one second computer program which, when executed by the at least one second processor, causes the at least one second processor to implement the power-saving control method of claim 4 or 5.

9. A data processing system, comprising the filter of claim 7 and the power-saving control apparatus of claim 8.

10. A computer-readable storage medium having stored thereon a computer program which, when executed by a processor, causes the processor to implement the method of any one of claims 1 to 5.

S110 — receive a power-saving control signal

S120 — receive a periodic synchronization signal

S130 — in response to the power-saving control signal being in an active state, output an inactive clock signal, with the inactive clock signal being a non-flipping signal

S140 — in response to the power-saving control signal being in an inactive state and the synchronization signal being received, output an active clock signal, and process to-be-processed data

FIG. 1

clk

Power-saving

synchronization

dout    D0  D1  D2  D3  D4    Dn-2 Dn-1  Dn  0    0    0  D0  D1  D2  D3  D4

FIG. 2

FIG. 3

FIG. 4

identify to-be-processed data — S210

in response to the to-be-processed data meeting a power-saving condition, generate a power-saving control signal — S220

generate a periodic synchronization signal — S230

send the power-saving control signal to a target chip — S240

send the synchronization signal to the target chip — S250

FIG. 5

303

first I/O interface

302

first storage device

304

301

first processor

FIG. 6

403

402

second I/O
interface

second
storage device

404

401

second
processor

FIG. 7

computer-readable
medium

FIG. 8

## INTERNATIONAL SEARCH REPORT

| International application No. |
| --- |
| **PCT/CN2023/102624** |

| **A.** | **CLASSIFICATION OF SUBJECT MATTER** |
| --- | --- |
| | G06F 1/3237(2019.01)i |

According to International Patent Classification (IPC) or to both national classification and IPC

| **B.** | **FIELDS SEARCHED** |
| --- | --- |

Minimum documentation searched (classification system followed by classification symbols)

    IPC: G06F 1/-

Documentation searched other than minimum documentation to the extent that such documents are included in the fields searched

Electronic data base consulted during the international search (name of data base and, where practicable, search terms used)

    CNABS; CNTXT; DWPI; ENTXT; CNKI: 中兴微, 时钟, 功耗, 时钟, 无效, 有效, 同步信号, 帧头, 芯片, 唤醒, clock, power consumption, clock, invalid, valid, synchronization, frame, header, chip, wake-up

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| X | CN 106020417 A (VIA TECHNOLOGIES, INC.) 12 October 2016 (2016-10-12) description, paragraphs [0042]-[0054], and figures 1-5 | 1-10 |
| A | CN 110908430 A (ZHUHAI JIELI TECHNOLOGY CO., LTD.) 24 March 2020 (2020-03-24) entire document | 1-10 |
| A | CN 111937442 A (OPPO GUANGDONG MOBILE TELECOMMUNICATIONS CO., LTD.) 13 November 2020 (2020-11-13) entire document | 1-10 |
| A | CN 112083791 A (CSG DIGITAL POWER GRID RESEARCH INSTITUTE CO., LTD. et al.) 15 December 2020 (2020-12-15) entire document | 1-10 |
| A | CN 115525137 A (TONGXIN MICROELECTRONICS CO., LTD.) 27 December 2022 (2022-12-27) entire document | 1-10 |
| A | US 8854086 B1 (INTEGRATED DEVICE TECHNOLOGY, INC.) 07 October 2014 (2014-10-07) entire document | 1-10 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 August 2023** | **31 August 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

| | International application No. |
|---|---|
| | **PCT/CN2023/102624** |

| Patent document cited in search report | | | Publication date (day/month/year) | Patent family member(s) | | | Publication date (day/month/year) |
|---|---|---|---|---|---|---|---|
| CN | 106020417 | A | 12 October 2016 | TWI | 581092 | B | 01 May 2017 |
| | | | | TW | 201734706 | A | 01 October 2017 |
| | | | | US | 2017285718 | A1 | 05 October 2017 |
| | | | | US | 10216250 | B2 | 26 February 2019 |
| CN | 110908430 | A | 24 March 2020 | None | | | |
| CN | 111937442 | A | 13 November 2020 | None | | | |
| CN | 112083791 | A | 15 December 2020 | None | | | |
| CN | 115525137 | A | 27 December 2022 | None | | | |
| US | 8854086 | B1 | 07 October 2014 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211719877